Europäisches Patentamt

European Patent Office

Office européen des brevets

(11) Veröffentlichungsnummer: **0 450 129 A1**

## (12) EUROPÄISCHE PATENTANMELDUNG

(21) Anmeldenummer: 90106612.6

(22) Anmeldetag: 06.04.90

(51) Int. Cl.⁵: **G06K 11/16, G06F 3/023**

(43) Veröffentlichungstag der Anmeldung:
09.10.91 Patentblatt 91/41

(84) Benannte Vertragsstaaten:
**BE DK ES FR GB GR IT LU NL SE**

(71) Anmelder: **Messerschmitt-Bölkow-Blohm
Gesellschaft mit beschränkter Haftung
Robert-Koch-Strasse
W-8012 Ottobrunn(DE)**

(72) Erfinder: **Künzel, Klaus
Waisenhausstrasse 15
W-8000 München 19(DE)**

(54) **Tastatur mit definierbaren Tasten.**

(57) Es wird eine Tastatur mit softwareseitig definier- baren Tasten aufgezeigt, die als Kipp-Platten-Tasta- tur ausgebildet ist, welche auf drei oder vier Druck- sensoren gelagert ist und mittels eines Rechners, in dem die geometrische Zuordnung jeder Tastenflä- che gespeichert ist, jede durch eine Druckkraft be- aufschlagte Fläche der Platte ermittelt. Ausführungs- beispiele sind beschrieben und in den Figuren skiz- ziert.

Fig.1

Die Erfindung bezieht sich auf eine Tastatur mit definierbaren Tasten gemäß dem Oberbegriff des Patentanspruchs 1.

Die bekannten Tastaturen, insbesondere für die Computer- bzw. Textverarbeitungstechnik weisen eine Reihe von Nachteilen auf. Sie sind beispielsweise nur in sehr engen Maßen konfigurierbar bzw. umzugestalten und dann nur unter sehr hohem Aufwand. Weiterhin ist die Vibrationsfestigkeit der bekannten Ausführungsformen kritisch und die sogenannten Soft-Key-Tastaturen sind nicht nur teuer, sondern auch bei optischer Abfrage sehr empfindlich gegen Verschmutzung. Die optischen Eigenschaften bei Touch-Screens werden durch die Folien nachteilig beeinflußt.

Durch die DE-OS 20 13 321 ist eine Vorrichtung zur Ortsbestimmung auf einer Oberfläche durch Anwendung einer Kraft auf den festzustellenden Punkt bekanntgeworden, bei der die Oberfläche mit Meßfehlern verbunden ist und in einer elektronischen Schaltung die Koordinaten des von der Kraft beaufschlagten Punktes ermittelt wird. Hier wird jedoch eine analoge Verknüpfung der gemessenen Kräfte verknüpft.

Aus "Der Elektroniker" Nr. 10/1988, S. 97 ist es bekannt, daß eine Tastatur aus einer Vielzahl auf einer Platte aneinandergereihter gleicher Flächenstücke zusammengesetzt ist.

Der Erfindung liegt die Aufgabe zugrunde, eine Tastatur der eingangs genannten Art zu schaffen, welche eine frei auswählbare Ausbildung der Tastatur, eine hohe Vibrationsfestigkeit und eine hohe Lageunempfindlichkeit aufweist.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert. Diese Erläuterung wird durch die Figuren der Zeichnung ergänzt. Es zeigen

Fig. 1    ein Schemabild in der Draufsicht auf eine Ausführungsform der vorgeschlagenen Kipp-Platten-Tastatur mit vier Auflager-Sensoren,

Fig. 2    ein Blockschaltbild des Rechneraufbaus der Kipp-Platten-Tastatur in vereinfachter Form,

Fig. 3    ein Diagramm mit verschiedenartigen Druckverläufen beim Betätigen der Tastatur.

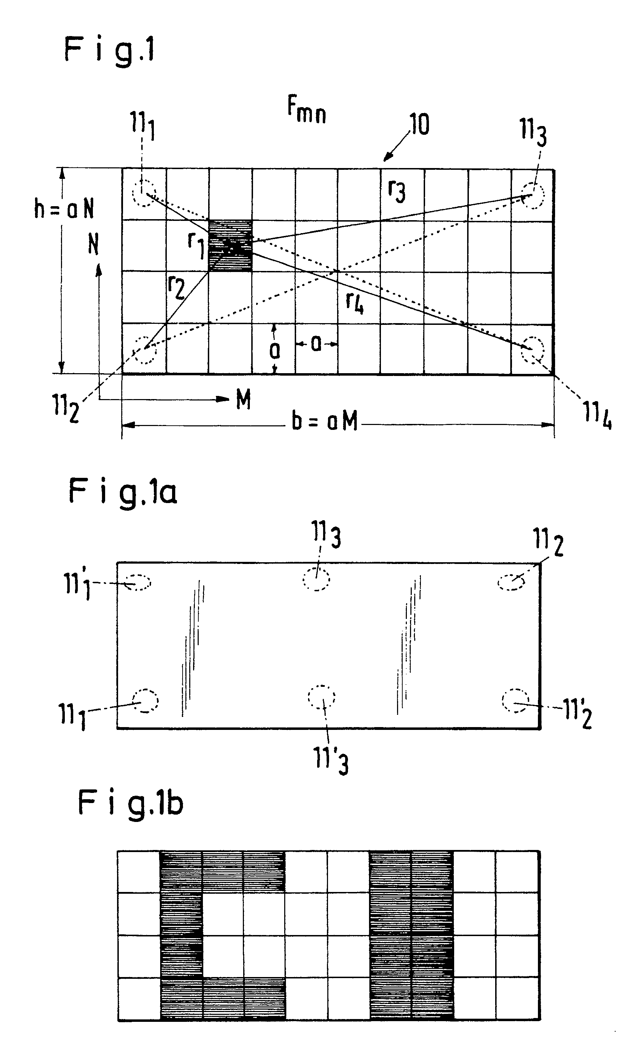

Zur Lösung der vorbeschriebenen Aufgabe sind im wesentlichen zwei Konfigurationen möglich und zwar einmal die Anordnung der Platte an drei Auflagerpunkten gemäß Figur 1a und zum andernmal die Anordnung an vier Auflagerpunkten gemäß Figur 1, über die die Platte 10 praktisch "kippbar" aufliegt. Als Auflager werden vorzugsweise Piezo-Drucksensoren eingesetzt; es sind aber auch andere Arten von Kraft- oder Drucksensoren geeignet.

Eine an einem beliebigen Ort auf der Platte 10 aufgebrachte Kraft - hier also der Fingerdruck - kann durch die unterschiedlichen Signale $f_i$, die die Sensoren $11_1$ - $11_3$ bzw. $11'_1$ bis $11'_3$ (Fig. 1a) an den Rechner 12 abgeben, der Ort dieses "Kraftpunktes" genau errechnet werden. Die Kipp-Platte ist mit einem kundenspezifischen Tastaturlayout versehen und dadurch jeder Ort der Plattenoberfläche als Taste bestimmter Bezeichnung signiert. Vorzugsweise wird die Tastatur in Form einer bedruckten Folie aufgebracht. Natürlich ist auch ein Ätzen oder Kerben der Tastatur möglich. In dem angeschlossenen Rechner ist nun die geometrische Zuordnung jeder dieser Tasten gespeichert. Damit ist eine eindeutige Zuordnung eines Druckes auf die Platte zu einer Taste gewährleistet. Bei dem hier beschriebenen Ausführungsbeispiel sind für die Berechnung trigonometrische Funktionen erforderlich, welche jedoch naturgemäß einen relativ hohen Rechenaufwand erfordern und zwar sowohl bei analoger als auch digitaler Berechnung.

In Fig. 1 ist eine erste Ausführungsform aufgezeigt. Hier sind vier Drucksensoren $11_1$ bis $11_4$ an den vier Eckpunkten der Kipp-Platte 10 angeordnet. Damit ist zwar das System überbestimmt, jedoch werden bei der Berechnung des geometrischen Ortes trigonometrische Funktionen vermieden, was zu einer schnelleren Ermittlung der "Ortsbestimmung" führt. Gleichzeitig aber werden auch Kontrollberechnungen ermöglicht, welche die Aussagerichtigkeit des Systems erhöhen.

Figur 1a zeigt ein Schemabild in der Draufsicht gemäß Fig. 1, lediglich mit nur drei Auflager-Sensoren $11'_1$ ... $11'_3$ bzw. $11_1$ ... $11_3$, die wahlweise verwendet werden können.

Die Auflösung der Tastatur in flächengleiche Quadrate geschieht nur, um eine Genauigkeits- und Auflösungsbetrachtung durchführen zu können. Eine im Rechner definierte Taste kann jedoch nach Figur 1b aus beliebigen Kombinationen dieser kleinsten Tastelemente $F_{mn}$ bestehen.

Generell kann gesagt werden, daß die vorgeschlagene Kipp-Platte 10 mit ihrer Tastatur eine vorteilhafte Lageunempfindlichkeit aufweist, die durch periodischen Nullabgleich der Meßelemente erreicht wird. Dieser Abgleich erfolgt vorzugsweise immer dann, wenn über eine definierte Zeitspanne keine Änderung der Kräfte an den Auflagerpunkten registriert worden ist. Dieser Nullabgleich funktioniert - wie Versuche bewiesen haben - auch dann, wenn ein beliebiges Objekt auf der Tastatur stehengelassen worden ist - beispielsweise eine auf der Platte abgestellte Kaffeetasse. Wird das Objekt entfernt, so führt dies zur Messung negativer Kräfte an den Auflagerpunkten, was ebenfalls einen Nullabgleich auslöst.

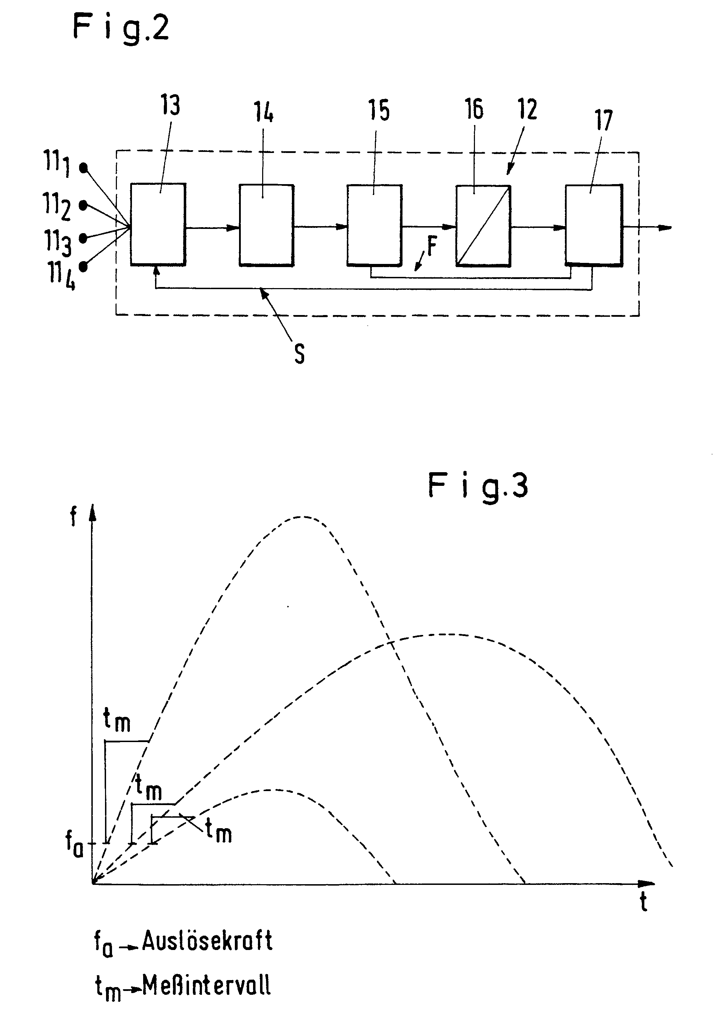

Figur 2 zeigt ein Blockschaltbild der gesamten Hardware, nämlich einen Analog-Multiplexer 13, eine Verstärkereinheit 14, einen Tiefpaßfilter 15, einen Analog/Digitalwandler 16 und einen Mikrorechner 17. Diese Anordnung zeichnet sich dadurch aus, daß sämtliche Elemente nur einmal vorhanden sind, was die Kosten positiv beeinflußt und daß der jeweils zu bearbeitende Drucksensor $11_1$ ... $11_4$ vom Rechner 17 über den Analog-Multiplexer 13 ausgewählt wird. Dazu dient eine Select-Leitung S mit 2 Bit Breite.

Der Tiefpaßfilter 15 kann derart ausgeführt sein, daß seine Filtercharakteristik über die Leitung F direkt vom Mikrorechner 17 verändert werden kann. Da dieser Filter die Vibrationsfestigkeit des Systems sicherstellt, kann somit auf die jeweiligen Umgebungsbedingungen reagiert werden.

Zur Erzielung einer hohen Vibrationsfestigkeit wird vorgeschlagen, daß auf der Analogseite des Meßsystems (Fig. 2) eine Tiefpaßfilterung des Meßsystems erfolgt. Über den Analog-Multiplexer 13 wird jeweils der Meßwert eines Drucksensors $11_1$ - $11_4$ vom Mikrorechner 17 ausgewählt und über die Verstärkereinheit 14 sowie den Tiefpaßfilter 15 dem Analog-Digitalwandler 16 zugeführt. Der Ausgangswert dieses Wandlers wird vom Mikrorechner 17 ausgelesen und verarbeitet.

Von den verwendeten Drucksensoren müssen keine erhöhten Genauigkeiten gefordert werden, da zur Ermittlung des geometrischen Ortes der aufgebrachten Kraft $f_i$ nur die Relationen der gemessenen Kräfte $f_1$ - $f_4$ zueinander betrachtet werden.

Figur 3 zeigt verschiedenartige Druckverläufe beim Betätigen der Tastatur. Grundsätzlich muß eine Auslösekraft $f_a$ erreicht werden, um einen Meßvorgang einzuleiten. Der Mikrorechner überwacht periodisch die Sensoren. Zeigt ein Sensor das Überschreiten der Auslösekraft an, so werden alle Sensoren über ein bestimmtes, konstantes Zeitintervall $t_m$ gemessen. Die jeweiligen Meßwerte werden gemittelt, wodurch eine weitere Erhöhung der Vibrationsfestigkeit erreicht werden kann.

Für das letztbeschriebene Ausführungsbeispiel soll nachstehend die rechnerische Ableitung zur Ermittlung der Kräfte auf die Kipp-Platte gebracht werden.

Ausgegangen wird also von einer an vier Ecken mit (Druck-)Kraftsensoren $11_1$ - $11_4$ aufgehängten starren Platte 10, die in gleiche Quadrate $F_{mn}$ aufgeteilt ist. Es soll nun durch Messung der vier Auflagerkräfte, deren Signal mit $f_1$ - $f_4$ bezeichnet sind, das Quadrat $F_{mn}$ bestimmt werden auf das eine Kraft f aufgebracht wird.

Gemessen wird also :

$f_1$, $f_2$, $f_3$, $f_4$,

Gesucht wird:

$(m,n)$ ; $n = 0,1,...M$; $m = 0,1,...N$;

Anordnungsparameter:

...$M$, $N$, $a$, $f_k$, $f_g$,

hierbei sind :

$M$ = Anzahl der kleinsten Elemente in m-Richtung,

$N$ = Anzahl der kleinsten Elemente in m-Richtung,

$a$ = Kantenlänge des Quadrates $F_{mn}$

$f_k$ = kleinster Wert von f

$f_g$ = größter Wert von f

Die durch Fingerdruck aufgebrachte Kraft f findet sich in den vier Auflagern wieder:

$$(1) \qquad f = \sum_{i=1}^{4} f_1$$

Die Aufteilung ist nach dem Hebelgesetz ungekehrt proportional dem Abstand $r_i$ zum jeweiligen Auflagerpunkt i bzw. $11_1$ bis $11_4$:

$$(2) \qquad f = \frac{\sum_{i=1}^{4} r_i f_i}{\sum_{i=1}^{4} r_i}$$

Die Kräfteaufteilung läßt sich mittels der Projektoren der $r_i$ auf die Verbindungslinie der Auflager durch die gleichzeitig zu erfüllenden Beziehungen

$$(3) \qquad \begin{aligned} f_1 \times m &= f_2 (M-m), \\ f_2 \times n &= f_3 (N-n), \\ f_4 \times m &= f_3 (M-m), \\ f_1 \times n &= f_4 (N-n) \end{aligned}$$

ausdrücken, woraus entsteht:

$$(4) \qquad \begin{aligned} n &= \frac{N}{f} (f_3 + f_4) \\ m &= \frac{M}{f} (f_2 + f_3) \end{aligned}$$

Daraus ergibt sich nun, daß durch Messung der vier Auflagekräfte $f_i$ und arithmetische Verknüpfungen (vier Additionen, zwei Multiplikationen und zwei Divisionen) gemäß Gleichung (1) und Gleichung (4) der Angriffspunkt der Druckkraft f im Raster (m, n) bestimmt wird. Wenn durch das Meßverfahren schon die Normierung $g_i = f_i/f$ vorgenommen wird, so können die Werte vorweg in einer zweidimensionalen Tabelle abgelegt werden. Zu bemerken ist außerdem noch: Da das System mit vier Auflagerpunkten überbestimmt ist, lassen sich noch andere, den Beziehung zu Gleichung (3) entsprechende, linear unabhängige Beziehungen aufstellen, die gegebenenfalls zur Ergebnisverifikation oder Ergebnisverbesserung verwendet werden können.

Abschließend soll noch auf die Genauigkeitsanforderungen eingegangen werden. Im Raster M x N läßt sich der Rasterpunkt (m, n) eindeutig bestimmen, wenn die Abweichungen $\epsilon f_i$ in die Gleichung (4) eingesetzt werden, ein Inkrement < 1 ergeben. Unter der Voraussetzung daß

$\epsilon_f \ll \epsilon f_i$ (dies ist naheliegend, da f aus Summierung der $f_i$ hervorgeht),
ist die Bedingung erfüllt, wenn für alle i

$$(5) \qquad \epsilon f_i < \frac{f_k}{2 \max \{ M, N \}}$$

wobei $f_k$ der kleinste Wert für f ist, der eine Messung auslöst. Wenn $f_g$ der größte Wert ist, bei dem noch gemessen wird, müssen alle vier Meßwertaufnehmer den Forderungen genügen :
Meßbereich $= ....f_g$ ; Auflösung $< \epsilon f_i$
Hierzu ein Beispiel :
gegeben ist : M = 10, N = 4, $f_k$ = 1 N; $f_g$ = 5 N
$\rightarrow \max \{ M, N \} = 10$

$$\epsilon f_i = \frac{1}{20} \ N;$$

Meßbereich 0...5 N und Auflösung 0,05 N ergibt 100 Inkremente, das entspricht 7 bit.

## Patentansprüche

1. Tastatur, die auf einer planen Platte aufgebracht ist, welche auf drei oder vier Drucksensoren kippbar gelagert und mit einem Rechner verbunden ist, der die geometrische Zuordnung jedes durch Kraft belasteten Punktes auf der Platte ermittelt, **dadurch gekennzeichnet,** daß die Tastatur (10) sich aus einer Vielzahl auf der Platte aneinandergereihter gleicher Flächenstücke zusammensetzt, die die Tasten bilden, daß ferner die Drucksensoren ($11_1$ bis $11_4$) einem periodischen Nullabgleich unterliegen und auf der Analogseite des Rechners (12) ein Tiefpaßfilter (15) angeordnet ist.

2. Tastatur nach Anspruch 1, **dadurch gekennzeichnet,** daß jede der im Rechner (12) definierten Tasten aus einer beliebigen Kombination kleinster Tastelemente ($F_{mn}$) besteht.

3. Tastatur nach Anspruch 1 oder 2, **dadurch gekennzeichnet,** daß die Drucksensoren ($11_1$ bis $11_4$) in an sich bekannter Weise als Piezo-Drucksensoren ausgebildet sind.

4. Tastatur nach den Ansprüchen 1 bis 3, **dadurch gekennzeichnet,** daß die Meßwerte aller Drucksensoren ($11_1$ bis $11_4$), die über ein bestimmtes, konstantes Zeitintervall ($t_m$) gemessen werden, im Rechner (12) gemittelt werden.

5. Tastatur nach Anspruch 1 bis 4, **dadurch gekennzeichnet,** daß das Tastaturlayout in Form einer bedruckten Folie auf die Platte (10) aufgeklebt ist.

6. Tastatur nach den Ansprüchen 1 oder 4, **dadurch gekennzeichnet,** daß das Tastaturlayout in die Platte (10) eingekerbt oder eingezeichnet ist.

# F i g.1

# F i g.1a

# F i g.1b

# Fig.2

13  14  15  16  12  17

$11_1$
$11_2$
$11_3$
$11_4$

F

S

# Fig.3

$f_a$ → Auslösekraft

$t_m$ → Meßintervall

Europäisches
Patentamt

**EUROPÄISCHER RECHERCHENBERICHT**

Nummer der Anmeldung

**EP 90 10 6612**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 126 345 (IBM) <br> * Abbildungen 1-4,6; Seite 6, Zeile 1 - Seite 7, Zeile 15; Seite 8, Zeile 19 - Seite 9, Zeile 6; Seite 10, Zeile 23 - Seite 11, Zeile 9 * <br> — — — | 1-4,6 | G 06 K 11/16 <br> G 06 F 3/023 |
| Y | DE-A-3 514 832 (SIEMENS AG) <br> * Abbildungen 1-4,6-8; Seite 12, Zeile 1 - Seite 14, Zeile 6 * <br> — — — — — | 1-4,6 | |
| | | | **RECHERCHIERTE SACHGEBIETE (Int. Cl.5)** <br><br> G 06 K 11 <br> G 06 F 3 |

**Der vorliegende Recherchenbericht wurde für alle Patentansprüche erstellt**

| Recherchenort | Abschlußdatum der Recherche | Prüfer |
|---|---|---|
| Den Haag | 12 Dezember 90 | WEISS P. |